# EUROPEAN PATENT SPECIFICATION

(11) **EP 0 871 590 B1**
(45) Date of publication and mention of the grant of the patent: **05.12.2001**
(21) Application number: 96901180.8
(22) Date of filing: 19.01.1996
(51) Int. Cl.: C02F 1/24, B01F 3/04, B03D 1/24

(54) **APPARATUS FOR DISTRIBUTION AND DISPERSION OF AIR SATURATED WATER**
VORRICHTUNG ZUR VERTEILUNG UND ZUM DISPERGIEREN VON MIT LUFT GESÄTTIGTEM WASSER
APPAREIL POUR LA DISTRIBUTION ET LA DISPERSION D'EAU SATUREE D'AIR

(30) Priority: 19.01.1995 SE 9500216
(43) Date of publication of application: 21.10.1998
(73) Proprietor: Eriksson, Hans, 762 93 Rimbo (SE); Isaksson, Kent, 761 94 Norrtälje (SE)
(72) Inventor: Eriksson, Hans, 762 93 Rimbo (SE); Isaksson, Kent, 761 94 Norrtälje (SE)
(74) Representative: Johansson, Lars-Erik
(86) International application number: PCT/SE96/00051
(87) International publication number: WO 96/22251

(56) References cited:
- US-A- 4 070 277
- US-A- 4 338 192
- US-A- 4 639 313

## Description

### TECHNICAL FIELD

An apparatus for distribution and dispersion of water, saturated with air under high pressure, which apparatus is preferably intended for use in a flotation basin in a water treatment plant, whereby the apparatus which comprises a distribution tube provided with orifices along one of its sides is positioned at the inlet openings for the water to be treated in the flotation basin.

### PRIOR ART

When treating water, drinking water as well as sewage water, flotation plants are used to an increasing extent in order to increase the rate of flow of the water through the treatment plants and as a consequence of this also making it possible to decrease the size of the necessary basins and thereby the size of the complete treatment plants. When it comes to drinking water the requirements on the finished product are mainly uniform and the design of a treatment plant is mainly decided by the character of the source of water supply. If the source is a lake or a water course usually separation of larger particles is taking place in a filter chamber whereafter the water is subjected to a chemical and biological treatment carried out by means of the addition of precipitation- and flocculation- agents in a flocculation chamber. The particles which are precipitated are then to be separated from the water which can be done by means of sedimentation which means that the particles through the influence from gravity sink to the bottom in a sedimentation basin. Different types of particles have different density and therefore different sinking velocity.

In order to make it possible for particles having low density, "light particles", to sediment while the water passes a sedimentation basin a long time is required which means that the surface of the sedimentation basin must be large.

The time for the particle separation could be considerably reduced by means of flotation which means that microscopic air bubbles are added to the water which adhere to particles or particle flocculations in the water and also contribute in the process of creating particle flocculations and keeping them together. Air bubbles raise fast towards the water surface bringing adhered particles and particle flocculations to the water surface where they create a stable sludge cover which can be removed by means of scrapers or by intermittently raising the water level in the flotation basin so that the sludge cover transfers to a sludge channel arranged at one of the edges of the basin.

The microscopic air bubbles which are used in the flotation procedure have a diameter of 30-80 micrometer and can not be generated for instance by means of the injection of air directly in the water. Microscopic air bubbles for flotation of drinking water are usually generated by means of dissolving air in clean water in a pressured vessel under overpressure whereby the biggest possible saturation level is aimed at. This water which usually is called dispersion water is fed with maintained high pressure to the inlet for the flocculated water in the flotation basin positioned at its bottom where it is added to said water via special nozzles or sprayers which are designed to give an instantaneous decrease in the pressure at which the air dissolved in the water is released in the form of microscopic bubbles creating a dispersion of air in the water.

The pressure vessels which are used for the generation of high pressure dispersion water, saturated with air to the greatest possible extent, are usually kept half filled with water by means of a control unit including sensors. The supply of compressed air takes place in the space filled with air above the water surface and the water is often supplied through a nozzle arranged in the side wall of the vessel in the air filled space through which nozzle the water is spraying against the opposite wall of the vessel where the water jet to some extent is split up.

The flotation method has considerably decreased the time for water treatment and the decreased time of flow means that water treatment plants could be made smaller keeping the same capacity. When the space requirement of the treatment plants decreases new application fields are opened. The method has however not only implied advantages. It has thus at the same time implied an increase of the cost for the treatment due to the fact that already cleaned water is recirculated and is being used for producing dispersion water. In order to get economy in the procedure it is necessary, by means of sophisticated methods, to keep the consumption of dispersion watered low, on one hand by increasing the level of air saturation in the dispersion water and on the other hand by achieving an ameliorated dispersion at the inlet of the dispersion water in the flotation basin.

As earlier mentioned the dispersion water is supplied to the flotation basin through a number of nozzles each one of which is provided with a valve which creates the instantaneous pressure decrease for the dispersion water which is required in order to release the air in the same creating microscopic bubbles. The nozzles are often positioned in a rake-formed arrangement on one side of a distribution tube having a length of several meters, to which tube the feeding is taking place through a feeding tube arranged at the middle of the distribution tube essentially perpendicular relative to the nozzles, which position, if we revert to the comparison with a rake, corresponds to the hole for the handle of the rake. A "rake" can comprise about 25 nozzles which are screwed into sockets welded on to the distribution tube. Complete distribution tubes provided with nozzles are comparatively expensive and if the nozzles are made of plastic they will easily be damaged e.g. when cleaning the basin.

### DESCRIPTION OF THE INVENTION

One object of the present invention is to propose an apparatus with high efficiency for distribution and dispersion of water, saturated with air under high pressure. Another object is to propose an apparatus which is rugged and has a low manufacturing cost. This is achieved by means of an apparatus having the characteristics according to the appended claims.

### DESCRIPTION OF THE DRAWINGS

One embodiment of the invention will be described more in detail with reference to the enclosed drawing on which figure 1 in a side view and schematically shows a conventionally equipped flotation basin in section, figure 2 shows in a front view and partly in section an apparatus according to the invention for distribution and dispersion of air saturated water and figure 3 shows the same apparatus in a side view and partly in section.

### PREFERRED EMBODIMENT

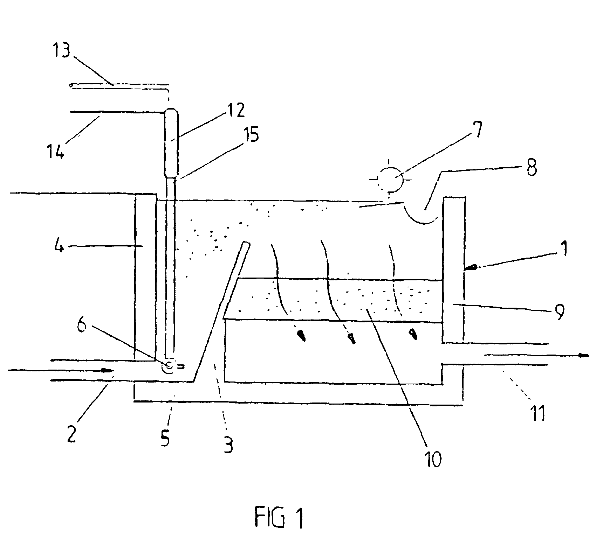

In figure 1 which schematically and in a side view shows a conventionally equipped flotation basin in section the basin is generally designated 1. The basin has an inlet 2 to which water is fed from a flocculation chamber, not shown. By means of an inclined barrier 3 arranged in front of the inlet 2 in the basin 1 the water is caused to flow upwards in the basin 1. At the bottom of the pocket which is created between the wall 4 of the basin and the barrier 3 a set of nozzles or sprayers 5 debouch arranged on a horizontal distribution tube. The tube 6 feed air saturated water, dispersion water, to the flocculated water supplied to the basin through the inlet 2 which water is given an increased movement by the dispersion water injected under pressure. The nozzles or sprayers 5 are so designed that the dispersion water is subjected to an instantaneous pressure decrease which releases the air in that water in the form of microscopic bubbles which in their movement towards the water surface adhere particles and particle flocculations and relatively fast carry most of these particles to the water surface where a sludge cover is created which by means of some kind of sludge scraper 7 or in another way is transferred to the sludge channel 8 at the wall 9 of the basin. Heavy particles which the Micro bubbles are not able to lift are collected by the filter 10 which is arranged between the back side of the barrier 3 and the wall 9 of the basin and through which filter the treated water passes on its way via the outlet 11 to a clear water basin, not shown. From this basin part of the treated water is pumped, under high pressure, to the water inlet 13 of the pressure vessel 12. The vessel 12 in which the dispersion water is produced is supplied with compressed air via the air inlet 14 from a compressor, not shown, and the air saturated water is fed back via the outlet 15 and the distribution tube 6 to the nozzles 5 arranged on the same in the flotation basin 1.

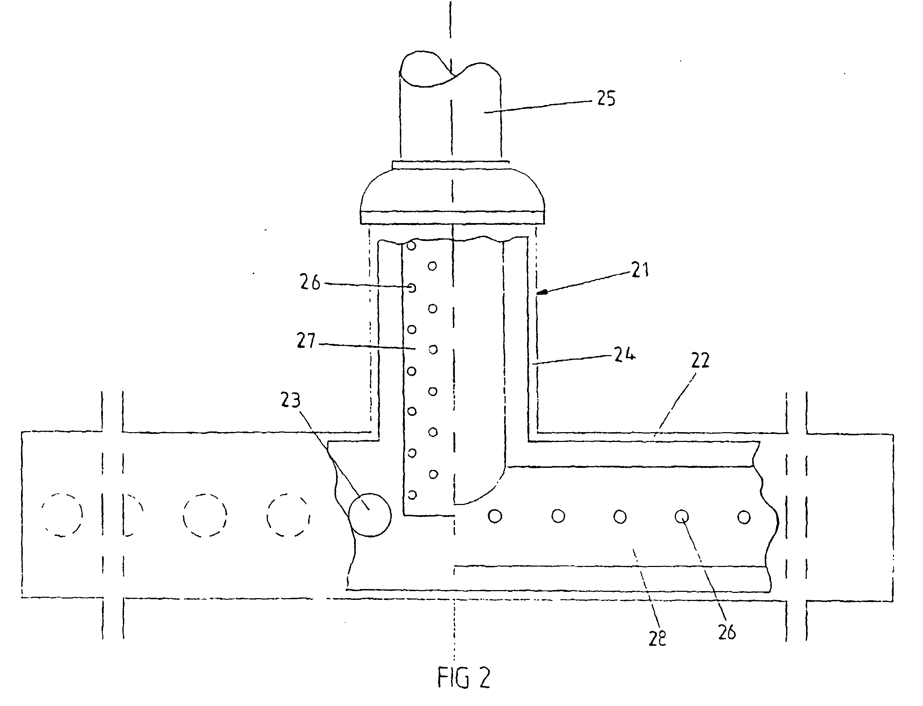

In figure 2 which schematically, in a front view and partly in section shows an apparatus according to the invention for distribution and dispersion of air saturated water the apparatus is generally designated 21. The apparatus comprises a housing including on one hand a horizontally positioned distribution tube having outlet openings 23 arranged along one of its sides (the back side in the figure) for dispersion water, on the other hand a tube connection piece 24 arranged at the middle portion of the distribution tube to which a feeding tube 25 for the supply of dispersion water is connected. Inside the housing a predispersion unit is positioned through the reducing holes 26 of which the supplied dispersion water has to pass while the pressure is decreased and a certain dispersion, predispersion, takes place, before it reaches the distribution tube 22. In figure 2 two embodiments for predispersion are shown, one in each half of the figure. The predispersion unit 27 to the left of the symmetry line is mainly arranged in the tube connection piece 24 and comprises a container provided with reducing holes 26 into which container the feeding tube 25 debouch.

The fact that there is only a certain dispersion of the air in the dispersion water at its passage through the holes 26 is due to the fact that the pressure decrease is not complete as part of the pressure is still present in the distribution tube 22. The final pressure equalization and dispersion is only taking place at the passage of the predispersed water through the outlet openings 23. The dispersion which is taking place in two steps will be much more efficient than dispersion by means of nozzles 5, between which there will be created a certain back-water or smooth water, partly due to the fact that the openings 23 are arranged close to each other and are evenly distributed.

The predispersion unit 28 which is shown to the right of the symmetry line in figure 2 has the form of a tube, having reducing holes 23 arranged along one side, being positioned co-axially inside the distribution tube 22, through which holes the dispersion water which is supplied to the dispersion unit 28 through the extension of the feeding tube 25 is pressed out, whereby as described above a certain dispersion takes place before the final dispersion at the passage of the openings 23. The openings 23 could be replaced by narrow horizontal slots.

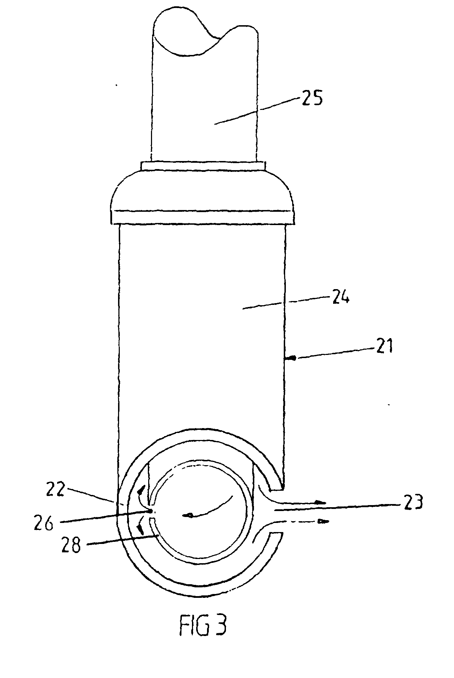

The apparatus as it is shown in the right portion of figure 2 is also shown in a side view and partly in section in figure 3. The designations of the different parts are the same as in figure 2. The flow of the dispersion water in and between the two tubes has been illustrated by means of arrows. The embodiment of the predispersion unit 28 shown in figure 3 and the right portion of figure 2 is in particular suited for long distribution tubes, while the predispersion unit 27 shown in the left portion of figure 2 is preferably suited for short distribution tubes.

## Claims

1. Apparatus for distribution and dispersion of water, saturated with air under high pressure, which apparatus is preferably intended for use in a flotation basin (1) in a water treatment plant, whereby the apparatus which comprises a distribution tube provided with orifices along one of its sides is positioned at the inlet openings (2) for the water to be treated in the flotation basin (1), **characterised in that** a predispersion unit (27, 28) is arranged in the distribution tube (22) or its connection piece (24) comprising a perforated tube arranged preferably co-axially in the respective tube through the perforations or reducing holes (26) of which the air saturated water during a first decrease of the pressure and corresponding dispersion passes on its way to the distribution tube (22) from which the water during a second decrease of the pressure and dispersion is pressed out into the flotation basin (1) through one or several openings (23) in the wall of the distribution tube (22).

## Patentansprüche

1. Vorrichtung zur Verteilung und Zerstreuung von Wasser, welches mit Luft unter hohem Druck gesättigt ist, welche Vorrichtung insbesondere für die Verwendung in einem Schwimmaufbereitungsbecken (1) in einer Wasseraufbereitungsanlage vorgesehen ist, wobei die Vorrichtung, welche ein Verteilerrohr aufweist, welches entlang einer Seite mit Öffnungen versehen ist, an den Einlassöffnungen (2) für das zu behandelnde Wasser in dem Schwimmaufbereitungsbecken (1) positioniert ist, **dadurch gekennzeichnet, dass** eine Vorzerstreuungseinheit (27, 28) in dem Verteilerrohr (22) oder in seinem Verbindungsstück (24) angeordnet ist, welche ein perforiertes Rohr aufweist, welches vorzugsweise koaxial in dem entsprechenden Rohr angeordnet ist, durch dessen Perforationen oder Reduzieröffnungen (26) das luftgesättigte Wasser während eines ersten Druckabfalls und der entsprechenden Zerstreuung auf seinem Weg zu dem Verteilerrohr (22) hindurchtritt, von welchem das Wasser während eines zweiten Druckabfalls und der entsprechenden Zerstreuung in das Schwimmaufbereitungsbecken (1) hinausgedrückt wird durch eine oder mehrere Öffnungen (23) in der Wand des Verteilerrohrs (22).

## Revendications

1. Appareil pour la distribution et la dispersion d'eau saturée d'air sous haute pression, cet appareil étant de préférence destiné à être utilisé dans un bassin de flottation (1) d'une installation de traitement des eaux, de façon que l'appareil qui comprend un tube de distribution muni d'orifices le long de l'un de ses côtés, soit positionné à l'endroit des ouvertures d'entrée (2) de l'eau à traiter dans le basin de flottation (1),
**caractérisé en ce qu'**
un bloc de prédispersion (27, 28) est disposé dans le tube de distribution (22) ou dans sa pièce de liaison (24) comprenant un tube préformé disposé de préférence coaxialement dans le tube respectif, de façon que les perforations ou les trous de réduction (26) de ce tube laissent passer l'eau saturée d'air pendant une première diminution de la pression et une dispersion correspondante, pendant son chemin vers le tube de distribution (22) à partir duquel l'eau, pendant une seconde diminution de la pression et une dispersion correspondante, est expulsée par pression dans le bassin de flottation (1) par une ou plusieurs ouvertures (23) de la paroi du tube de distribution (22).
